# EUROPEAN PATENT SPECIFICATION

(11) **EP 0 495 463 B1**
(45) Date of publication and mention of the grant of the patent: **02.09.1998**
(21) Application number: 92100526.0
(22) Date of filing: 14.01.1992
(51) Int. Cl.: F25D 29/00, G05D 23/19

(54) **Apparatus and method of refrigeration of a controlled space**
Vorrichtung und Verfahren zur Kühlung eines Raumes
Dispositif et procédé de réfrigération d'un espace

(30) Priority: 15.01.1991 US 641293
(43) Date of publication of application: 22.07.1992
(73) Proprietor: THERMO KING CORPORATION, Minneapolis Minnesota 55420 (US); HONEYWELL INC., Minneapolis Minnesota 55408 (US)
(72) Inventor: Truckenbrod, Greg, Fridley, MN 55421 (US); Wacker, Paul C., Plymoth, MN 55442 (US)
(74) Representative: Schwan, Gerhard, Dipl.-Ing.

(56) References cited:
- EP-A- 0 299 361
- GB-A- 2 059 642
- US-A- 4 918 932

## Description

### BACKGROUND OF THE INVENTION

1. **Field of the Invention** - The present invention relates to a control apparatus and to a method according to the preambles of claims 1 and 6 respectively. Such an apparatus and such a method are known for instance from US-A-4 663 725.

2. **Description of the Prior Art** - It is known in the art to control the temperature of a space used to store or transport perishable materials such as foodstuffs. In controlling temperature in such a space, it is most difficult when the space is used to transport the perishable materials, such as with refrigeration trucks.

Much of the difficulty arises because of the change in thermal loading caused by large changes in the ambient with respect to time of day, geographical location, and weather conditions. A particular problem results from the initial loading of the refrigeration truck. It is desirable to pull down the temperature as quickly as possible to provide maximum retardation of spoilage. However, care must be exercised not to over shoot the target temperature anywhere within the refrigerated space, thereby freezing some or all of the cargo.

US-A-4 715 190 discusses a rudimentary temperature control system.

The above-mentioned US-A-4 663 725 describes an advanced microprocessor based temperature control apparatus for rapidly bringing a controlled space to a desired temperature by controlling a refrigeration system which is selectively operable in a high cool mode at its maximum cooling capacity or in a low cool mode at a controlled cooling capacity. The prior control apparatus comprises a discharge air temperature sensor disposed to sense the temperature of air discharged from the refrigeration system to the controlled space, a return air temperature sensor disposed to sense the temperature of air returned from the controlled space to the refrigeration system, and means responsively coupled to the air temperature sensors for terminating the high cool mode in response to either one of the sensors. US-A-4 663 725 also discloses a method for terminating a high cool mode of a refrigeration system of a temperature controlled spaced, which refrigeration system is selectively operable in a high cool mode at its maximum cooling capacity or in a low cool mode at a controlled cooling capacity comprising monitoring the temperature of air discharge from the refrigeration system to the controlled space, terminating the high cool mode if the discharge air temperature coincides with a first predefined condition, monitoring the temperature of air returned from the controlled space to the refrigeration system, and terminating the high cool mode if the return air temperature coincides with a second predefined condition. In the apparatus and the method of US-A-4 663 725 one of the sensors is used at a time. It is taught that different loads (i.e. fresh and frozen) require different pull down algorithms and hence different temperature sensors, and the prior system requires manual input for algorithm and temperature sensor selection. The temperature sensors are switched automatically only upon detection of sensor failure or manual change of algorithm.

US-A-4 589 060 also discusses a microprocessor based temperature control system.

Techniques for control of the refrigeration process are described in US-A-4 742 689 and US-A-4 934 155. These documents show control of temperature through the use of hot gas bypass of the compressor in an attempt to maintain a more constant compressor speed.

A highly sophisticated system for temperature control is taught in US-A-4 918 932. This system uses an integrated average of the outputs of a discharge sensor and a return sensor to control the refrigeration apparatus. The algorithm of this system treats the initial pull down of the temperature following cargo loading in the same manner as the steady state.

### Summary of the Invention

The present invention overcomes the disadvantages of the prior art by a control apparatus as defined in claim 1 and by a method as defined in claim 6.

In conformity with the subject invention both the discharge and return air temperature sensors are utilized simultaneously. The high cool mode may be terminated by a sensed condition from either sensor.

In the preferred mode, any one of three separate conditions can terminate the high cool mode. If the discharge temperature is less than the setpoint minus 50/9 °C (ten °F), if the return temperature is less than the setpoint plus 5/9 °C(one °F), or if the time integral of discharge temperature lower than the floor temperature exceeds 83 °C minutes (150 degree F minutes), the high cool mode is terminated.

The first two (2) conditions result in normal termination of the high cool mode. Either situation may occur first depending upon thermal loading conditions, initial cargo temperature, and other factors at the time of cargo loading. With either termination condition, maximum protection is afforded the cargo. Because the high cool mode involves maximum cooling capacity from the refrigeration unit, minimum exposure to spoilage is achieved. On the other hand, because both discharge and return air is monitored, protection from partial freezing is enhanced.

The third termination condition (i.e. degree minutes exceeding 83 °C minutes (150 °F minutes)) may occur during equipment malfunction, failure to properly seal the refrigerated space, or inadequate refrigeration capacity for a given cargo. More often, this will result during high ambient and/or high heat loads.

In the preferred mode, and not intended to be limiting of the present invention, the condition causing termination of the high cool mode may be used to initiate a particular method for long-term operational monitoring and control of the refrigerated space. For example, termination based upon the discharge air sensor may initiate long-term monitoring of the refrigerated space from the discharge sensor. Similarly termination based upon the return air sensor may initiate long-term monitoring from the return air sensor.

### BRIEF DESCRIPTION OF THE DRAWINGS

Other objects of the present invention and many of the attendant advantages of the present invention will be readily appreciated as the same becomes better understood by reference to the following detailed description when considered in connection with the accompanying drawings, in which like reference numerals designate like parts throughout the figures thereof and wherein:
**FIG. 1** is a schematic diagram of a refrigeration system employing the present invention;
**FIG. 2** is a flow chart of the logic of the present invention; and,
**FIG. 3** is a graphical representation of the two normal termination conditions.

### DETAILED DESCRIPTION OF THE PREFERRED EMBODIMENTS

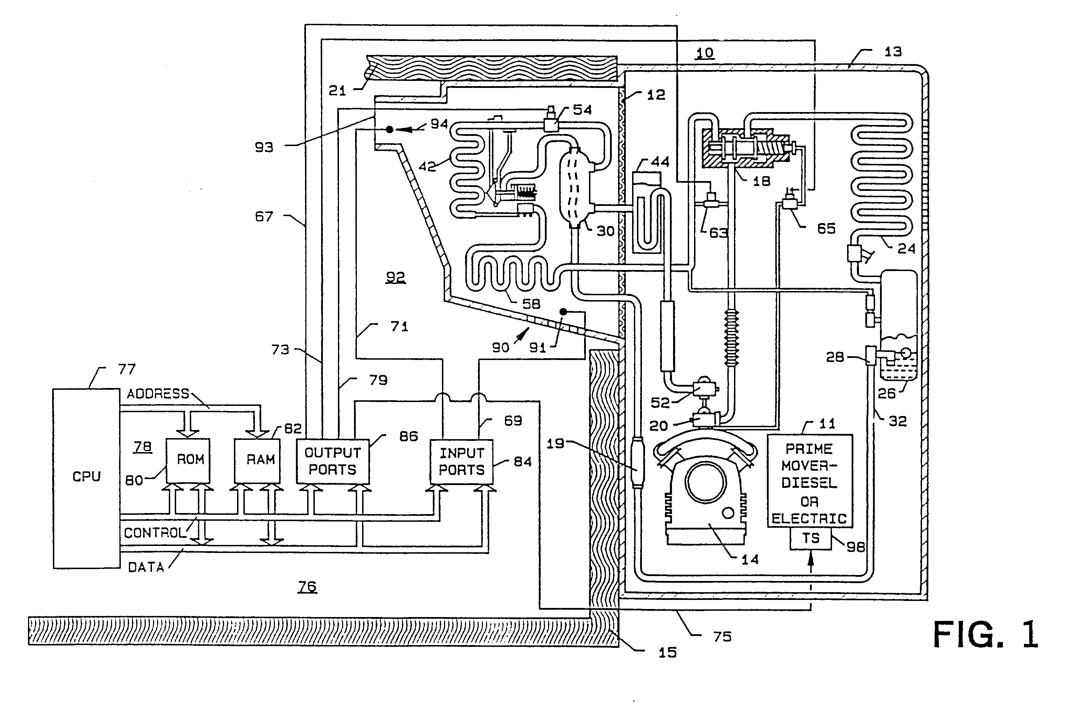

**FIG. 1** is a schematic view of a refrigeration system 10 employing the present invention. In the preferred mode, and not to be interpreted as limiting of the present invention, refrigeration system 10 is incorporated into a refrigeration truck (not shown). Starboard wall 15 and port wall 21 are partially shown encompassing refrigerated space 92. Aperture 12 is located in the forward wall of the refrigerated space for mechanical access of the refrigeration components as shown. Digital control system 76 is shown within refrigerated space 92 as a matter of convenience in illustration only. In actual operation, digital control system 76 is located outside of refrigerated space 92.

Housing 13 encompasses those components of the refrigeration system housed outside of refrigerated space 92. It contains prime mover 11 which is a source of mechanical motion to operate compressor 14. Prime mover 11 may use a number of techniques, but is preferably either a diesel engine or electric motor. The speed of prime mover 11 is controlled by digital control system 76 via cable 75 and interface 98 as is explained in more detail below.

Condenser coil 24, fed by compressor 14 via three-way valve 18, serves to exchange heat with the environment through the opening shown in housing 13. This exchange may be dissipation of excess heat in the cooling modes or acquisition of heat for the heating modes. Reservoir 26 collects excess liquid coolant and dispenses it through tubing 32 via exit valve 28 as required. Tubing 32 contains dryer 19. Valves 20 and 52 provide for input to and output from compressor 14. Reservoir 44 is placed in the suction line as shown.

Return air from refrigerated space 92 enters the evaporator coil housing via vent 90 and corresponding vents (not shown) in the bottom of the housing. Evaporation coils 42 and 58 cool or heat the return air on the way to discharge port 93. Temperature sensor 91 monitors the temperature of the return air and temperature sensor 94 monitors the temperature of the discharge air. Heat exchanger 30 connects evaporation coils 42 and 58 to the suction line. Modulation valve 54 controls suction line flow in response to digital control system 76 connected via cable 79. Control of modulation valve 54 permits adjustment of the refrigeration system capacity in operation.

Digital control system 76 is a microprocessor controller operated by firmware/software as described in more detail below. Central processing unit 77 runs the control firmware/software. Read only memory 80 is suitable for storage of the control firmware/software and various numerical constants. Random access memory 82 is used for storage of variables and for input and output buffering. Output ports 86 couple to interface 98 via cable 75 to control prime mover 11, to the heat/cool pilot solenoid controlling the three-way heat/cool valve 18 via cable 73, hot gas bypass valve 63 via cable 67, and to modulation valve 54 via cable 79. Input ports 84 couple to return air temperature sensor 91 via cable 69 and to discharge air temperature sensor 94 via cable 71.

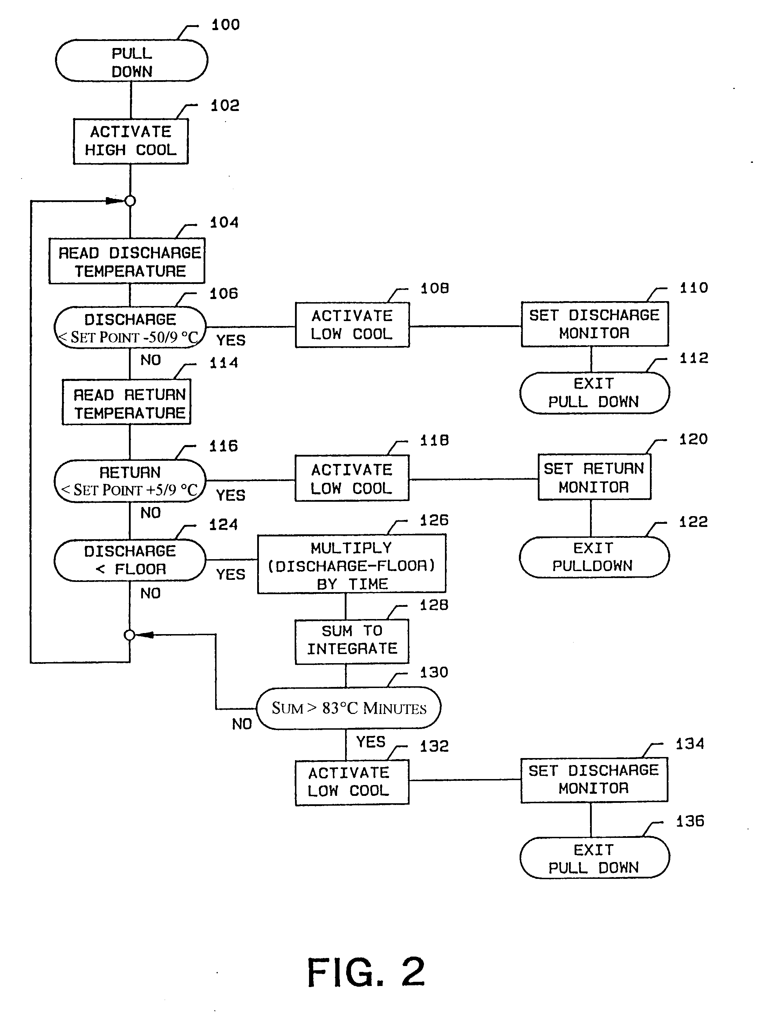

**FIG. 2** is flowchart of the operation of the high cool mode in accordance with the preferred embodiment of the present invention. The high cool mode is entered at element 100. Element 102 activates the high cool mode of the refrigeration system 10 (see also FIG. 1). In the high cool mode, refrigeration system 10 operates at its maximum cooling capacity with modulation valve 54 completely open.

The discharge air temperature is read via discharge air temperature sensor 94 at element 104. If the discharge air temperature is more than 50/9°C (ten degrees °F) below the set point, element 106 routes control to element 108 which deactivates the high cool mode and activates the low cool mode of refrigeration system 10. In the low cool mode, modulation valve 54 is used to control the cooling capacity. Element 110 sets the discharge monitor before exiting high cool mode at element 112. This indicates that the high cool mode was terminated as a result of reading the discharge air temperature sensor. Such an indication implicitly relates the capacity of refrigeration system 10 to the thermal loading of the particular cargo, refrigerated space volume, ambient conditions, etc.

If the high cool mode is not terminated as a result of the discharge air temperature sensor reading by elements 106 through 112, it is because the measured discharge air temperature is greater than the set point minus 50/9°C (ten degrees °F). Control is transferred to element 114, which reads the output of return air temperature sensor 91. If the return air temperature is less than the set point 5/9°C plus (1°F), element 116 routes control to element 118 which deactivates high cool mode and activates low cool mode. By setting the return monitor, element 120 indicates that the high cool mode was terminated by reading the return air temperature sensor. Exit is had via element 122.

If the high cool mode is not terminated by either of the normal termination conditions, element 124 determines whether the discharge air temperature is less than the floor temperature. If not, control is returned to element 104 to again search each of the high cool mode termination conditions.

If element 124 determines that the discharge temperature is less than the floor temperature, element 126 multiplies the difference between the discharge temperature and the floor temperature by the time. Integration is performed by element 128. Element 130 determines whether the integrated sum is greater than 83°C minutes (150 degree F minutes). If not, control is returned to element 104 for reconsideration of each of the three termination conditions.

If element 130 determines that the integrated sum is greater than 83°C minutes (150 degree F minutes), the high cool mode will be terminated as a safety measure. Element 132 deactivates the high cool mode and activates the low cool mode. Element 134 sets the discharge monitor, and exit is obtained via element 136.

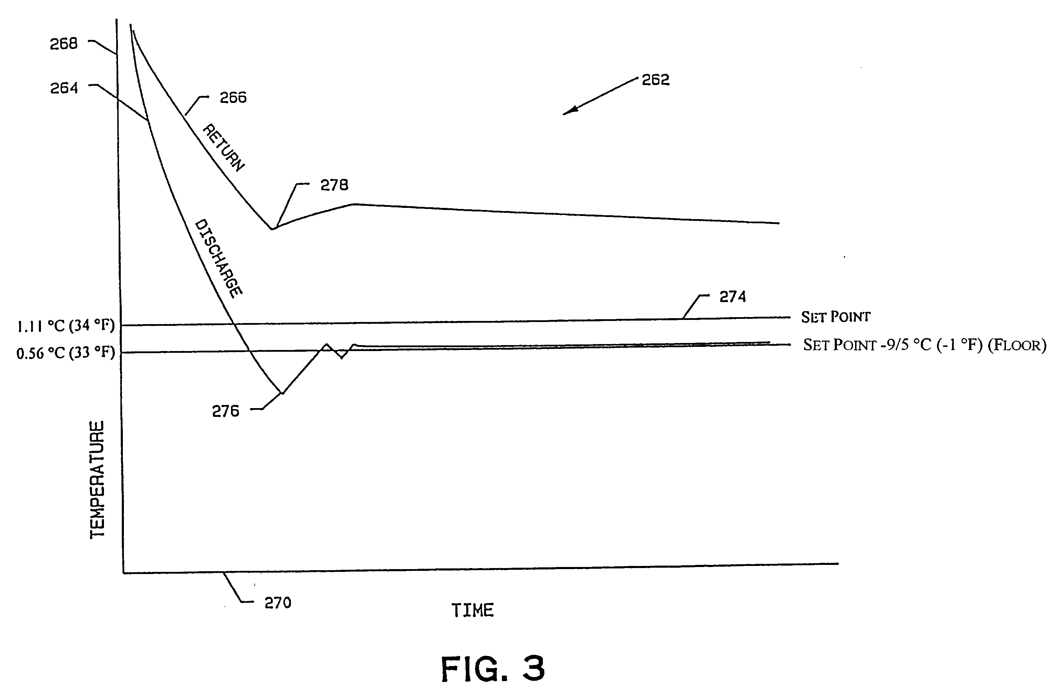

**FIG. 3** is a graphical representation 262 of the two normal conditions under which the high cool mode is terminated. The graph shows temperature 268 as a function of time 270. In this particular situation, and not to be considered as limiting of the present invention, the set point 34 is established at 1.1°C (34°F).

A first termination condition concerns discharge temperature 264 shown during the high cool mode. Termination of the high cool mode may occur whenever discharge temperature 264 is more than 50/9°C (ten degrees F) below set point 34 as shown at point 276. This results in a setting of the discharge monitor (see also element 106 of Fig. 2).

The second normal termination condition occurs when return air temperature 266 becomes less than 5/9°C (one degree F) greater than set point 274 as represented by point 278. This second termination condition results in setting of the return monitor (see also element 116 of Fig. 2).

## Claims

1. A control apparatus for rapidly bringing a controlled space (92) to a desired temperature by controlling a refrigeration system (10) which is selectively operable in a high cool mode at its maximum cooling capacity or in a low cool mode at a controlled cooling capacity, said control apparatus having a discharge air temperature sensor (94) disposed to sense the temperature of air discharged from said refrigeration system (10) to said controlled space (92) and a return air temperature sensor (91) disposed to sense the temperature of air returned from said controlled space (92) to said refrigeration system (10), **characterized by** means (76) responsively coupled to said discharge air temperature sensor (94) for comparing said discharge air temperature to a first predetermined value and responsively coupled to said return air temperature sensor (91) for comparing said return air to a second predetermined value and for terminating said high cool mode in response to the result of either one of said comparisons.

2. A control apparatus according to claim 1 wherein said comparing and terminating means (76) comprises:
a) first determining means for determining whether the return air temperature is less than a predetermined set point plus 5/9 °C (one degree F); and
b) first deactivating means coupled to said first determining means for deactivating said high cool mode whenever said first determining means indicates that said return air temperature is less than said predetermined set point plus 5/9 °C (one degree F).

3. A control apparatus according to claim 2, wherein said comparing and terminating means (76) further comprises:
a) second determining means for determining whether the discharge air temperature is less than a predetermined set point minus 50/9 °C (ten degrees F); and
b) second deactivating means coupled to said second determining means for deactivating said high cool mode whenever said second determining means indicates that said discharge air temperature is less than a predetermined set point minus 50/9 °C (ten degrees F).

4. A control apparatus according to claim 2 further comprising means for discontinuing said high cool mode whenever the difference between said discharge air temperature and a predetermined floor temperature of said temperature controlled space (92) multiplied by time is greater than a predetermined integral.

5. An apparatus according to claim 4 wherein said predetermined integral is 83 °C minutes (150 degree F minutes).

6. A method for terminating a high cool mode of a refrigeration system (10) of a temperature controlled space (92), which refrigeration system is selectively operable in a high cool mode at its maximum cooling capacity or in a low cool mode at a controlled cooling capacity, comprising:
monitoring the temperature of air discharged from said refrigeration system (10) to said controlled space (92) and monitoring the temperature of air returned from said controlled space (92) to said refrigeration system (10);
characterized by:
terminating said high cool mode if said discharge air temperature coincides with a first predetermined value or if said return air temperature coincides with a second predetermined value.

7. A method according to claim 6 further comprising:
a) computing the difference between said discharge air temperature and a predetermined floor temperature of said temperature controlled space (92); and
b) terminating said high cool mode if said computed value coincides with a predefined intregral.

## Patentansprüche

1. Steuervorrichtung, um einen gesteuerten Raum (92) rasch auf eine gewünschte Temperatur zu bringen, indem ein Kühlsystem (10) gesteuert wird, welches selektiv in einem Modus starker Kühlung bei dessen maximaler Kühlkapazität oder in einem Modus schwacher Kühlung bei einer gesteuerten Kühlkapazität betrieben werden kann, wobei die Steuervorrichtung versehen ist mit einem Auslaßluft-Temperatursensor (94) zum Erfassen der Temperatur der von dem Kühlsystem (10) an den gesteuerten Raum (92) abgegebenen Auslaßluft sowie mit einem Rückluft-Temperatursensor (91) zum Erfassen der Temperatur der von dem gesteuerten Raum (92) an das Kühlsystem (10) rückgeführten Luft, gekennzeichnet durch eine Anordnung (76), die mit dem Auslaßluft-Temperatursensor (94) gekoppelt ist und auf diesen anspricht, um die Temperatur der Auslaßluft mit einem vorbestimmten Wert zu vergleichen, und die ferner mit dem Rückluft-Temperatursensor (91) gekoppelt ist und auf diesen anspricht, um die Temperatur der rückgeführten Luft mit einem zweiten vorbestimmten Wert zu vergleichen, und wobei die Anordnung (76) ausgelegt ist, den Modus starker Kühlung in Ansprechen auf das Ergebnis von einem der beiden Vergleiche zu beenden.

2. Steuervorrichtung nach Anspruch 1, wobei die Vergleichs- und Beendigungsanordnung (76) versehen ist mit:
a) einer ersten Erfassungsanordnung zum Erfassen, ob die Temperatur der rückgeführten Luft unter dem vorbestimmten Wert plus 5/9 °C (1 °F) liegt; und
b) einer mit der ersten Erfassungsanordnung gekoppelten ersten Deaktivierungsanordnung zum Deaktivieren des Modus starker Kühlung, wenn die erste Erfassungsanordnung anzeigt, daß die Temperatur der rückgeführten Luft unter dem vorbestimmten Wert plus 5/9 °C (1 °F) liegt.

3. Steuervorrichtung nach Anspruch 2, wobei die Vergleichs- und Beendigungsanordnung (76) ferner versehen ist mit:
a) einer zweiten Erfassungsanordnung zum Erfassen, ob die Temperatur der Auslaßluft unter dem vorbestimmten Wert minus 50/9 °C (10 °F) liegt; und
b) einer mit der zweiten Erfassungsanordnung gekoppelten zweiten Deaktivierungsanordnung zum Deaktivieren des Modus starker Kühlung, wenn die zweite Erfassungsanordnung anzeigt, daß die Temperatur der Auslaßluft unter einem vorbestimmten Wert minus 50/9 °C (10 °F) liegt.

4. Steuervorrichtung nach Anspruch 2, ferner versehen mit einer Anordnung zum Unterbrechen des Modus starker Kühlung wenn die Differenz zwischen der Temperatur der Auslaßluft und einer vorbestimmten Bodentemperatur des temperaturgesteuerten Raumes (92) multipliziert mit der Zeit größer als ein vorbestimmtes Integral ist.

5. Steuervorrichtung nach Anspruch 4, wobei das vorbestimmte Integral 83 °C Minuten (150 °F Minuten) beträgt.

6. Verfahren zum Beenden eines Modus starker Kühlung eines Kühlsystems (10) für einen temperaturgesteuerten Raum (92), wobei das Kühlsystem selektiv in einem Modus starker Kühlung bei dessen maximaler Kühlkapazität oder in einem Modus schwacher Kühlung bei einer gesteuerten Kühlkapazität betrieben werden kann, wobei im Zuge des Verfahrens:
die Temperatur der von dem Kühlsystem (10) an den gesteuerten Raum (92) abgegebenen Auslaßluft sowie die Temperatur der von dem gesteuerten Raum (92) an das Kühlsystem (10) rückgeführten Luft überwacht werden;
dadurch gekennzeichnet, daß
der Modus starker Kühlung beendet wird, wenn die Temperatur der Auslaßluft mit einem ersten vorbestimmten Wert übereinstimmt oder wenn die Temperatur der Rückluft mit einem zweiten vorbestimmten Wert übereinstimmt.

7. Verfahren nach Anspruch 6, bei welchem ferner
a) die Differenz zwischen der Temperatur der Auslaßluft und einer vorbestimmten Bodentemperatur des temperaturgesteuerten Raumes (92) berechnet wird; und
b) der Modus starker Kühlung beendet wird, wenn der berechnete Wert mit einem vorbestimmten Integral übereinstimmt.

## Revendications

1. Appareil de commande pour mettre rapidement un espace commandé (92) à une température voulue par commande d'un système de réfrigération (10) qui peut être mis en service sélectivement en mode à fort refroidissement à une capacité maximale de refroidissement ou en mode de faible refroidissement à une capacité commandée de refroidissement, ledit appareil de commande ayant un capteur (94) de température de l'air déchargé qui est disposé de manière à détecter la température de l'air déchargé dudit système de réfrigération (10) dans ledit espace commandé (92) et un capteur (91) de la température de l'air de reflux qui est disposé de manière à détecter la température de l'air renvoyé dudit espace commandé (92) dans ledit système de réfrigération (10), caractérisé par des moyens (76) qui sont connectés audit capteur (94) de la température de l'air déchargé de manière à répondre par une comparaison de ladite température de l'air déchargé à une première valeur prédéterminée et qui sont connectés audit capteur (91) de la température de l'air de reflux de manière à répondre par une comparaison dudit air de reflux à une deuxième valeur prédéterminée et à achever ledit mode de fort refroidissement en réponse au résultat de l'une ou l'autre desdites comparaisons.

2. Appareil de commande selon la revendication 1, dans lequel lesdits moyens de comparaison et d'achèvement (76) comprennent :
a) un premier moyen de détermination destiné à déterminer si la température de l'air de reflux est inférieure à un point prédéterminé de réglage plus 5/9°C (un degré F) ; et
b) un premier moyen de mise hors service qui est connecté audit premier moyen de détermination pour mettre hors service ledit mode de fort refroidissement à chaque fois que ledit premier moyen de détermination indique que ladite température de l'air de reflux est inférieure audit point de réglage plus 5/9°C (un degré F).

3. Appareil de commande selon la revendication 2, dans lequel lesdits moyens de comparaison et d'achèvement (76) comprennent par ailleurs :
a) un deuxième moyen de détermination destiné à déterminer si la température de l'air déchargé est inférieure à un point prédéterminé de réglage moins 50/9°C (dix degrés F) ; et
b) un deuxième moyen de mise hors service connecté audit deuxième moyen de détermination pour mettre hors service ledit mode de fort refroidissement à chaque fois que ledit deuxième moyen de détermination indique que ladite température de l'air déchargé est inférieure à un point prédéterminé de réglage moins 50/9° (dix degrés F°).

4. Appareil de commande selon la revendication 2, comprenant par ailleurs un moyen pour interrompre ledit mode de fort refroidissement à chaque fois que la différence entre ladite température de l'air déchargé et une température plancher prédéterminée dudit espace à température commandée (92), multipliée par le temps, est supérieure à une intégrale prédéterminée.

5. Appareil selon la revendication 4, dans lequel ladite intégrale prédéterminée est 83°C minutes (150 degrés F minutes).

6. Procédé pour achever un mode de fort refroidissement d'un système de réfrigération (10) d'un espace (92) dont la température est commandée, ledit système de réfrigération pouvant être mis sélectivement en service en mode de fort refroidissement à sa capacité maximale de refroidissement ou en mode de faible refroidissement à une capacité commandée de refroidissement, comprenant :
le contrôle de la température de l'air déchargé dudit système de réfrigération (10) dans ledit espace commandé (92) et le contrôle de la température de l'air envoyé dudit espace commandé (92) dans ledit système de réfrigération (10) ;
caractérisé par :
l'achèvement dudit mode de fort refroidissement si ladite température dudit air déchargé coïncide avec une première valeur prédéterminée et si ladite température de l'air de reflux coïncide avec une seconde valeur prédéterminée.

7. Procédé selon la revendication 6, comprenant par ailleurs :
a) le calcul de la différence entre ladite température de l'air déchargé et une température plancher prédéterminée dudit espace (92) dont la température est commandée ; et
b) l'achèvement dudit mode de fort refroidissement si ladite valeur calculée coïncide avec une intégrale prédéterminée.
